# EUROPEAN PATENT SPECIFICATION

(11) **EP 3 095 583 B1**
(45) Date of publication and mention of the grant of the patent: **07.02.2018**
(21) Application number: 16165684.8
(22) Date of filing: 15.04.2016
(51) Int. Cl.: B29C 51/08, B29C 51/44, B29C 51/26, B29K 25/00, B29K 23/00, B29L 31/00, B29C 51/10

(54) **MACHINE AND METHOD FOR PRODUCING THERMOFORMED ARTICLES HAVING AN IMPROVED STACKING SYSTEM**
MASCHINE UND VERFAHREN ZUR HERSTELLUNG VON WARMGEFORMTEN ARTIKELN MIT VERBESSERTEM STAPELSYSTEM
MACHINE ET MÉTHODE DE FABRICATION D'ARTICLES THERMOFORMÉS AYANT UN SYSTÈME D'EMPILAGE AMÉLIORÉ

(43) Date of publication of application: 23.11.2016
(73) Proprietor: Güven Teknik Makina ve Kalip San. Dis Tic. Ltd. Sti., Istanbul (TR)
(72) Inventor: Kücük, Erkan, Istanbul (TR)
(74) Representative: Mutlu, Aydin

(56) References cited:
- EP-A1- 2 143 550
- US-A- 6 123 538

## Description

### Technical Field of the Invention

The present invention relates to a machine for producing thermoformed articles such as cups, plates, trays and the like after being thermoformed in a mould forming section. The present invention is particularly related to a machine for producing thermoformed articles comprising an improved stacking system with a particular turret system which moves between a stacking unit and a mould forming section.

### Background of the Invention

Plastic cups and similar articles are commonly produced from polymeric materials such as polystyrene, polypropylene, polyethylene and the like by a deep drawing process in a mould. Some of them are reusable while others are intended for a single use followed by recycling or disposal. There are various plastic cup production machines in which the cups are generally thermoformed and stacked at the same time.

Stacking machines constitutively have a moulding unit, a stacking unit and a transfer mechanism which works between the moulding unit and the stacking unit in order to deliver the moulded articles to the stacking unit after they are thermoformed in the moulding unit. Said transfer mechanism, for transmission of the moulded articles between the moulding unit and the stacking unit, can be provided by cam mechanisms and drive levers.

In such systems, the transfer mechanism approaches to the moulding unit by a shaft driven with a motor and then picks the moulded articles followed by carrying them to the stacking unit. Said transfer mechanism is generally an integral part of the production machine and is fixed thereto by an anchoring pin in a pivotable fashion. The transfer mechanism therefore needs to be properly arranged in order to get into a perfect alignment with the moulding and stacking units so that the articles moulded may successfully transferred from the moulding unit and expelled to stacking unit. However, this is not always the case and various problems are encountered in this process. For example, the moulded articles may stick to the forming mould or the transfer mechanism per se, and it may also happen that the moulded articles jammed in the mechanism causing a deterioration in the product. It is also a frequent problem that the transfer mechanism does not work properly in an alignment with moulding and stacking units as mentioned above. In these cases, it is very difficult to remove the transfer mechanism from the machine because of the anchoring pin. Therefore, in order to solve the problem occurred in the transfer mechanism, first the machine has to be stopped and the anchoring pin has to be screwed off. This situation causes a loss of time and possibly industrial accidents.

In order to solve the aforementioned problems, two cam may be mounted in the sides, or H bearing of the moulding unit (the system which presses a foil to form the articles) and two bearings following these cams are disposed in the opposing stacking plate. There are provided two air pressure support pistons keeping these bearings on the cams.

In these systems, stacking unit moves with respect to the circular and linear motion of the cams and the bearings follow the cams according to this motion. In said systems, it is required to have lower moulding block and the upper moulding block which are parallel to each other and move simultaneously against each other. However, the support pistons of the bearings following the cams apply continuously high pressure due to air pressure and destroy parallel alignment of the lower moulding block. Therefore, this results in a collapse of centering of lower moulding block and also deterioration of its cutting equipment.

An apparatus for forming articles in a thermoplastic sheet and stacking the articles in a stacking collector is suggested by US Patent No. 6,135,756. The apparatus includes upper and lower moulds whereby the lower mould is moved linearly away from the upper mould in a vertical direction and then transversely moved in a second linear transverse path of movement to a remote discharge location. Apparatus is provided for reorienting the mould between its orientation in the first linear path of movement and its orientation in the second path of movement. However, these kind of systems suffer different problems as scrutinized below.

EP 2 143 550 A1 discloses a machine for producing thermoformed articles comprising a lower assembly which is moved and tilted in its entirety with the help of a cam slot and associated rollers. The lower assembly comprises also additional components such as links (16, 17) which carries along with said rollers and cam slot, the load under gravity in the course of tilting. These parts however are swiftly deteriorated with excessive load caused by gravity, energy consumption becomes higher and precision of the device decreases in time.

Today, the stacking machines are provided with a turret system in order to collect the moulded articles from the corresponding moulds and deliver the same to a stacking unit. In these machines, article holders operated under vacuum with a plunger mechanism are provided. The turret system with an article holder and a plunger mechanism moves both in vertical and transverse direction by way of a servo motor and reducer, and delivers the articles to the stacking unit. However, the cam belt underneath the system is unduly loaded because the servo motor and the reducer used in these systems are quite heavy, therefore the system deforms quickly. Another drawback of these systems is that the cables which transmit data and power to the servo motor mounted behind the turret deform over time because of that the movement. Therefore, the turret does not work with correct timing and crashes to the moulding unit because of the faulty positioning.

As a result, there is a continuous need in order to improve the machines of above type which would overcome the disadvantages of the transferring systems available in the prior art. The present invention suggests an improved turret system which would provide better cooperation with stacking unit and the moulding unit. The turret system of the present invention is easy to interfere from the outside for fixing the problems and it works properly without alignment problems an undue loading of the weight to the carrier components. These objectives have been achieved with a machine as presented in claim 1.

### Brief Description of the Invention

The present invention solves outstanding problems of the prior art with a machine for producing thermoformed articles (3) comprising a stacking system (1) having a mould forming section (4), a stacking unit (5) and a turret system (2) operable inbetween the said mould forming section (4) and stacking unit (5) arranged at a distance to each other in horizontal direction (x). The improved stacking system (1) of the present invention further comprises:
a body (12) having a cam guide channel (13) extending through the distance along the horizontal direction (x), wherein one end (20) of said cam guide channel (13) is arranged in an upper position compared to the other end (21) with respect to the vertical direction (y), and
a turret system (2) comprising a main body (10) moving substantially linearly through the horizontal axis (x), and further components (8, 19) moving biaxially (x, y) and rotating independently from the said main body (10) for picking the moulded articles (3) from the mould forming section (4) and expelling the same to the stacking unit (5), whereby the turret system (2) further comprises means (14, 15, 16, 17) for moving the components (8, 19) carrying the moulded articles (3) biaxially (x, y) such that the said components (8, 19) are adapted to rotate when the means (14, 15, 16, 17) encounter a difference in vertical direction (y) through the said cam guide channel (13).

Preferably the mould forming section (4) and stacking unit (5) as mentioned above are provided in a face to face arrangement such that the components (8, 19) carrying the moulded articles (3) are pivotally rotated with an obtuse angle. This angle is preferably about 180°. The foregoing means (14, 15, 16, 17) for moving the components (8, 19) carrying the moulded articles (3) biaxially (x, y) comprises a bearing (14) moving through the cam guide channel (13), a pivotal arm (15) connected to the said bearing (14) and gearwheels (16, 17) causing said components (8, 19) to pivotally rotate once the bearing (14) encounters a difference in vertical direction (y) through the said cam guide channel (13). One of the gearwheels (16) has a larger diameter than the other gearwheel (17), and said bigger gearwheel (16) is rotatably attached to the pivotal arm (15) whereas the smaller gearwheel (17) is fixedly attached to one of the components (8, 19) bearing the moulded articles (3).

Still in preferred embodiments, the components (8, 19) bearing the moulded articles (3) may comprise a turret plate (19) and a plurality of arms (8) fixedly attached to the turret plate (19). The arms (8) may comprise vacuum means for successfully receiving the moulded articles (3) from a plurality of cavities (7) in the mould forming section (4). The stacking system (1) may also comprise a linear rail (11) so that the movable body (10) can move in a pathway substantially linear through the horizontal direction (x), and a moving means (9) for providing horizontal movement of the movable body (10). Said moving means (9) may comprise a conveyor belt carrying the turret system (2) and it may further comprise a motor which can be selected from a group comprising an electric motor, a hydraulic motor or a pneumatic motor.

The machine according to the present invention may also comprise means for controlling movement of the turret system (2) and counting means in the stacking unit (5) so that the moulded articles in the stacking unit (5) reaching to a predetermined number are expelled for packaging.

In a further aspect, the present invention relates also to a method for producing thermoformed articles from a plastic material comprising the steps of;
- feeding a thermoplastic polymer foil to the machine as defined in the foregoing and deep drawing of plastic articles (3) in the mould forming section (4), and
- stacking of the moulded articles (3) in the stacking unit (5).

The plastic material referred to herein can be selected from the group consisting of polystyrene, polypropylene and polyethylene. Preferably, both the machine and method disclosed hereinabove is adapted for producing thermoformed cups.

The reference numbers are used to point out the components of the machine described and illustrated herein in order to facilitate to understanding of the invention. Therefore, the reference numbers are meant to be merely illustrative, but not limiting.

### Brief Description of the Figures

Figure 1 is a representative view of the stacking system of the machine according to the present invention whereby the turret system is shown in a position receiving moulded articles from the mould forming section.
Figure 2 is a detailed view of the turret system and mould forming section in the position shown in Fig. 1.
Figure 3 is a representative view of the turret system in the course of approaching to the stacking unit whereby the components carrying the moulded articles pivotally rotates independently from the main body.
Figure 4 is a detailed view of the turret system in a position expelling the moulded articles to the stacking unit.

### Description of the Reference Numbers

- 1.: Stacking system
- 2.: Turret system
- 3.: Thermoformed articles
- 4.: Mould forming section
- 5.: Stacking unit
- 6.: Lower mould
- 7.: Cavity
- 8.: Arm
- 9.: Moving means
- 10.: Movable body
- 11.: Linear rail
- 12.: Body of cam guide channel
- 13.: Cam guide channel
- 14.: Bearing
- 15.: Pivotal arm
- 16.: Bigger gearwheel
- 17.: Smaller gearwheel
- 18.: Stacking channels
- 19.: Turret plate
- 20.: End of the cam guide channel
- 21.: Beginning of the cam guide channel

### Detailed Description of Invention

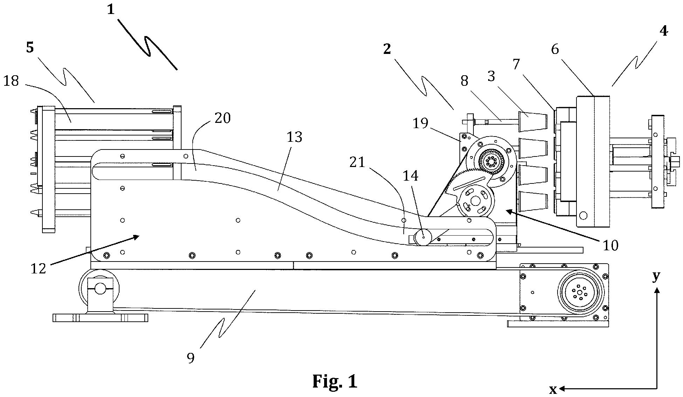

The present invention relates to a machine for producing thermoformed articles (3) comprising a stacking system (1) with an improved turret system (2) as shown generally in Fig. 1. Said stacking system (1) comprises constitutively a mould forming section (4), a stacking unit (5) and a turret system (2) which works between the mould forming section (4) and said stacking unit (5) as conventionally known in the art. Said mould forming section (4) may be fed with a thermoplastic synthetic resin foil passing through the lower mould (6). There are also plurality of cavities (7) in the mould forming section (4) wherein the foil would be deep drawn according to the shape of the cavities (7) in order to provide thermoformed articles (3) in moulded form.

In an aspect of the present invention, the mould forming section (4) and the stacking unit (5) are arranged at a distance to each other, and preferably, in a substantially face to face arrangement in the horizontal direction (x) as shown in Fig. 1. More preferably, the openings of the cavities (7) in the mould forming section (4) as well as the openings of the stacking channels (18) are arranged in parallel to the vertical direction (y) so that the mould forming section (4) and the stacking unit (5) may perfectly be arranged in a face to face arrangement. Therefore, the turret system (2) of the invention is arranged such that it moves through the said distance in horizontal direction (x), and at the same time, pivotally rotates with an obtuse angle (e.g. 180°) for successfully receiving the thermoformed articles (3) from the cavities (7) and expelling them to the stacking channels (18) of the stacking unit (5).

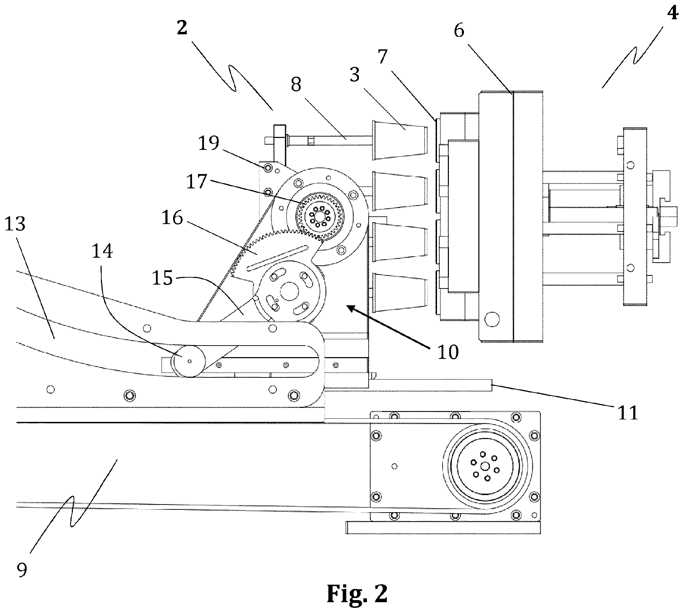

The turret system (2) of the present invention comprises a plurality of arms (8) to pick the thermoformed articles (3) from the cavities (7) of the mould forming section (4) and deliver them to the stacking unit (5). As seen in Fig. 2, said arms (8) attached to the turret plate (19) engage with the thermoformed articles (3) formed in the cavities (7) of the mould forming unit (4). Preferably the arms (8) are equipped such that a vacuum is applied upon the thermoformed articles (3) when said arms (8) come into alignment with the cavities (7) mentioned above. Therefore, according to the preferred embodiments, vacuum means are integrally formed with the turret system (2).

In another aspect, the present invention provides a thermoforming machine comprising an improved turret system (2) with a movable body (10) following substantially a linear pathway through the horizontal direction (x) within the distance between the mould forming section (4) and stacking unit (5), preferably by means of a linear rail (11). Therefore, the present invention is advantageous in that the movable body (10) carries the turret system (2) in a pathway substantially linear through the horizontal direction (x). As opposed to the prior art, it is sufficient that only the arms (8) and the associated turret plate (19) rotates in vertical direction (y) without the need to rotate the turret system (2) in its entirety. This not only eliminates the heavy load on the carrier components but also eliminates the need for additional components such as further actuation means and reducers which may consume high amount of energy. Additionally, provision of rotating components as lighter as possible prominently eliminates alignment problems inbetween the mould forming section (4) and stacking unit (5), and obviously, movement of the entire turret system (2) in a linear fashion ensures more precise alignment with said mould forming section (4) and stacking unit (5).

In a third aspect, the stacking system (1) of the present invention further comprises a body (12) having a cam guide channel (13) extending through the distance between the mould forming section (4) and the stacking unit (5) for guiding relevant components of the turret system (2) in its movement through the horizontal direction (x). However, one end (20) of said cam guide channel (13) is arranged in an upper position compared to the other end (21) with respect to the vertical direction (y) so that the components carrying the thermoformed articles (3) in the turret system (2) are rotated pivotally in the course of turret system's (2) movement. Therefore, the turret system (2) is equipped with a bearing (14) moving through the said cam guide channel (13), and a pivotal arm (15) along with a gear mechanism (16, 17) as shown in Fig. 2.

According to the preferred embodiments as shown in the figures, said gear mechanism may comprise at least two gearwheels (16, 17) which can be pivoted in conformity with each other. Preferably, one of the gearwheels (16, 17) has a smaller diameter than the other, and the smaller gear wheel (17) steers the arms (8) of the turret system (2), while the bigger gearwheel (16) transfers the vertical movement from the bearing (14) to the smaller gearwheel (17) when the movable body (10) is driven on the guiding means (11) in order to ensure horizontal movement for the turret system (2). Preferably, the stacking system (1) further comprises a moving means (9), and more preferably a conveyor belt system for providing horizontal movement of the movable body (10) belonging to the turret system (2).

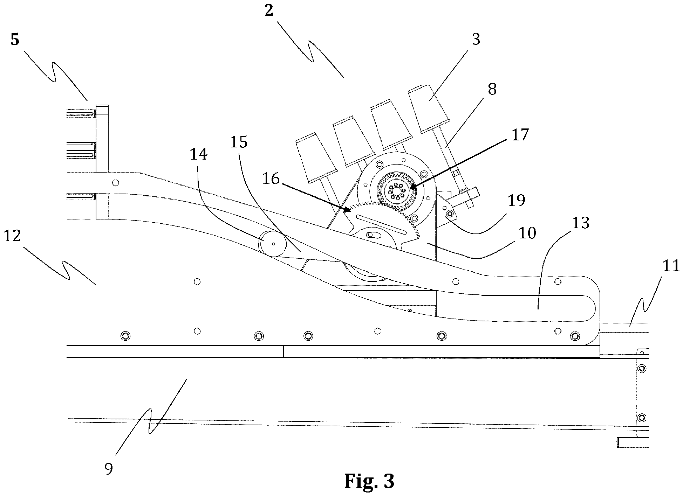

Advantageously, the cam guide channel (13) on the body of cam guide channel (12) ensures biaxial (x, y) movement of the carrier arms (8) and turret plate (19), and movement of the aforementioned movable body (10) of the turret system (2) horizontally between mould forming section (4) and stacking unit (5), as seen in Fig. 3 in a closer view. As noted in the preferred embodiments mentioned above, a gearwheel (16) is pivotably attached to the pivotal arm (15) which is attached to the bearing (14), and it further engages with another gearwheel (17) which is fixedly formed with the turret plate (19) for the pivotal movement of the carrier components (8, 19) independently from the movable body (10).

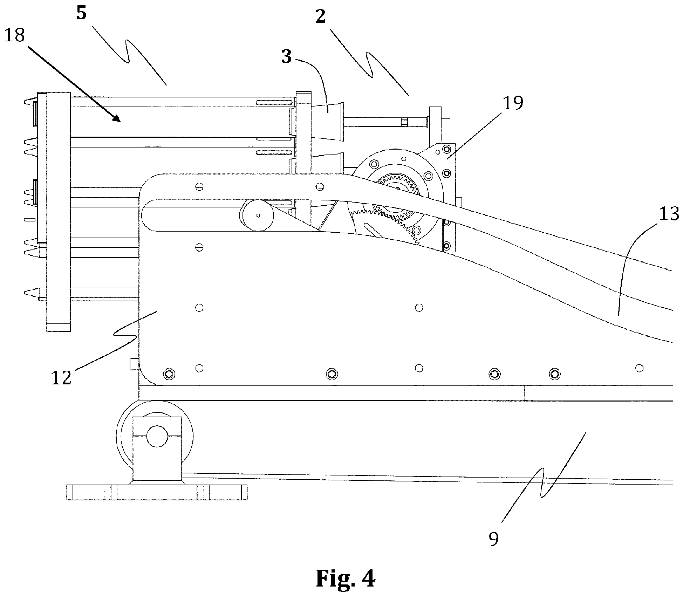

The movable body (10) driven on the linear rail (11) approaches to the stacking unit (5) in order to dispose the thermoformed articles (3) to the stacking channels (18) while the turret plate (19) rotates as shown in Fig. 4. The aforesaid movement of the whole turret system (2) is preferably ensured with moving means (9) which can be driven by a motor, and the pivotal arm (15) transfers the movement of the bearing (14) to the gear mechanism (16, 17). When the bearing (14) starts moving and encounters a deviation from the horizontal axis (x) it starts to rotate the pivotal arm (15) and the gear mechanism (16, 17) such that components (i.e. the arms (8) and turret plate (19) of the turret system (2)) bearing the thermoformed articles (3) starts moving pivotally and biaxially.

As seen in Fig. 4, the arms (8) of the turret system (2) are disposing the thermoformed articles (3) to the stacking unit (5) wherein the pivotal arm (15) is adapted to activate the gear mechanism (16,17) in order to adjust the arms' (8) position according to the stacking channels (18) of the stacking unit (5).

As mentioned above, the components of the stacking system (1) may be driven by a motor. Said motor can be an electric motor, hydraulic motor or a pneumatic motor which can be mounted onto the moving means (9) of the stacking system (1). The stacking system (1) may comprise means for controlling the movement of the turret system (2) and counting means in the stacking unit (5) so that the thermoformed articles (3) in the stacking channels (18) reaching to a predetermined number are expelled for packaging.

In a further aspect, the present invention relates also to a method for producing thermoformed articles (3) from a plastic material comprising the steps of;
- feeding a thermoplastic polymer foil to the machine as defined in the foregoing and deep drawing of thermoformed articles (3) in the mould forming section (4), and
- stacking of the thermoformed articles (3) in the stacking unit (5).

## Claims

1. A machine for producing thermoformed articles (3) comprising a stacking system (1) having a mould forming section (4), a stacking unit (5) and a turret system (2) operable inbetween the said mould forming section (4) and stacking unit (5) arranged at a distance to each other in horizontal direction (x), **characterized in that** the stacking system (1) further comprises:
a body (12) having a cam guide channel (13) extending through the distance along the horizontal direction (x), wherein one end (20) of said cam guide channel (13) is arranged in an upper position compared to the other end (21) with respect to the vertical direction (y), and
a turret system (2) comprising a movable body (10) moving substantially linearly through the horizontal axis (x), and further components (8, 19) moving biaxially (x, y) and rotating independently from the said movable body (10) for picking the thermoformed articles (3) from the mould forming section (4) and expelling the same to the stacking unit (5), whereby the turret system (2) further comprises means (14, 15, 16, 17) for moving the components (8, 19) carrying the thermoformed articles (3) biaxially (x, y) such that the said components (8, 19) are adapted to rotate when the means (14, 15, 16, 17) encounter a difference in vertical direction (y) through the said cam guide channel (13).

2. A machine according to claim 1 wherein mould forming section (4) and stacking unit (5) are provided in a face to face arrangement such that the components (8, 19) carrying the thermoformed articles (3) are pivotally rotated with an obtuse angle, preferably about 180°.

3. A machine according to claim 1 wherein means (14, 15, 16, 17) for moving the components (8,19) carrying the thermoformed articles (3) biaxially (x,y) comprises a bearing (14) moving through the cam guide channel (13), a pivotal arm (15) connected to the said bearing (14) and a gearwheel mechanism (16,17) causing said components (8, 19) to pivotally rotate once the bearing (14) encounters a difference in vertical direction (y) through the said cam guide channel (13).

4. A machine according to claim 3 wherein one of the gearwheels (16) has a larger diameter than the other gearwheel (17), and said bigger gearwheel (16) is rotatably attached to the pivotal arm (15) whereas the smaller gearwheel (17) is fixedly attached to one of the components (8, 19) bearing the thermoformed articles (3).

5. A machine according to claim 1 or 4 wherein the components (8, 19) bearing the thermoformed articles (3) comprise a turret plate (19) and a plurality of arms (8) fixedly attached to the turret plate (19).

6. A machine according to claim 5 wherein the arms (8) comprise vacuum means for receiving the thermoformed articles (3) from a plurality of cavities (7) in the mould forming section (4).

7. A machine according to claim 1 wherein the stacking system (1) further comprises linear rail (11) so that the movable body (10) can move in a pathway substantially linear through the horizontal direction (x).

8. A machine according to claim 1 wherein the stacking system (1) further comprises a moving means (9) for providing horizontal movement of the movable body (10).

9. A machine according to claim 8 wherein the moving means (9) comprises a conveyor belt carrying the turret system (2).

10. A machine according to claim 8 wherein the moving means (9) comprises a motor.

11. A machine according to claim 10 wherein the motor is selected from a group comprising an electric motor, a hydraulic motor or a pneumatic motor.

12. A machine according to claim 1 further comprising means for controlling the movement of the turret system (2) and counting means in the stacking unit (5) so that the thermoformed articles in the stacking unit (5) reaching to a predetermined number are expelled for packaging.

13. A machine according to claim 1 which is of the type for producing thermoformed cups.

14. A method for producing thermoformed articles from a plastic material comprising the steps of;
- feeding a thermoplastic polymer foil to the machine according to claim 1 and deep drawing of thermoformed articles (3) in the mould forming section (4), and
- stacking of the thermoformed articles (3) in the stacking unit (5).

15. A method according to claim 14 wherein the plastic material is selected from the group consisting of polystyrene, polypropylene and polyethylene.

## Patentansprüche

1. Eine Maschine zum Herstellen von wärmegeformten Artikeln (3), die ein Stapelsystem (1) aufweist, das einen Formbildungsabschnitt (4), eine Stapeleinheit (5) und ein Drehkopfsystem (2) aufweist, das zwischen dem Formbildungsabschnitt (4) und der Stapeleinheit (5), die in horizontaler Richtung (x) mit einem Abstand zueinander angeordnet sind, betreibbar ist, **dadurch gekennzeichnet, dass** das Stapelsystem (1) ferner folgende Merkmale aufweist:
einen Körper (12), der einen Nockenführungskanal (13) aufweist, der sich entlang der horizontalen Richtung (x) durch den Abstand erstreckt, wobei ein Ende (20) des Nockenführungskanals (13) im Vergleich zu dem anderen Ende (21) bezüglich der vertikalen Richtung (y) in einer höheren Position angeordnet ist, und
ein Drehkopfsystem (2), das einen bewegbaren Körper (10), der sich im Wesentlichen linear durch die horizontale Achse (x) bewegt, sowie weitere Komponenten (8, 19) aufweist, die sich biaxial (x, y) bewegen und unabhängig von dem bewegbaren Körper (10) drehen, um die wärmegeformten Artikel (3) von dem Formbildungsabschnitt (4) aufzunehmen und dieselben zu der Stapeleinheit (5) auszuwerfen, wobei das Drehkopfsystem (2) ferner eine Einrichtung (14, 15, 16, 17) zum Bewegen der Komponenten (8, 19), die die wärmegeformten Artikel (3) biaxial (x, y) befördern, aufweist, so dass die Komponenten (8, 19) angepasst sind, sich zu drehen, wenn die Einrichtung (14, 15, 16, 17) eine Differenz in vertikaler Richtung (y) durch den Nockenführungskanal (13) feststellt.

2. Eine Maschine gemäß Anspruch 1, bei der der Formbildungsabschnitt (4) und die Stapeleinheit (5) in einer Fläche-an-Fläche-Anordnung derart bereitgestellt sind, dass die Komponenten (8, 19), die die wärmegeformten Artikel (3) befördern, in einem stumpfen Winkel, vorzugsweise von etwa 180 Grad, schwenkbar gedreht sind.

3. Eine Maschine gemäß Anspruch 1, bei der die Einrichtung (14, 15, 16, 17) zum Bewegen der Komponenten (8, 19), die die wärmegeformten Artikel (3) biaxial (x, y) befördern, ein Lager (14), das sich durch den Nockenführungskanal (13) bewegt, einen Schwenkarm (15), der mit dem Lager (14) verbunden ist, und einen Getrieberadmechanismus (16, 17) aufweist, der bewirkt, dass die Komponenten (8, 19) sich schwenkbar drehen, sobald das Lager (14) eine Differenz in vertikaler Richtung (y) durch den Nockenführungskanal (13) feststellt.

4. Eine Maschine gemäß Anspruch 3, bei der eines der Getrieberäder (16) einen größeren Durchmesser als das andere Getrieberad (17) aufweist und das größere Getrieberad (16) drehbar an dem Schwenkarm (16) angebracht ist, während das kleinere Getrieberad (17) fest an einer der Komponenten (8, 19) angebracht ist, die die wärmegeformten Artikel (3) tragen.

5. Eine Maschine gemäß Anspruch 1 oder 4, bei der die Komponenten (8, 19), die die wärmegeformten Artikel (3) befördern, eine Drehkopfplatte (19) und eine Mehrzahl von Armen (8) aufweisen, die fest an der Drehkopfplatte (19) angebracht sind.

6. Eine Maschine gemäß Anspruch 5, bei der die Arme (8) eine Vakuumeinrichtung zum Aufnehmen der wärmegeformten Artikel (3) von einer Mehrzahl von Hohlräumen (7) in dem Formbildungsabschnitt (4) aufweisen.

7. Eine Maschine gemäß Anspruch 1, bei der das Stapelsystem (1) ferner eine lineare Schiene (11) aufweist, so dass der bewegbare Körper (10) sich in einem Weg bewegen kann, der im Wesentlichen linear durch die horizontale Richtung (x) führt.

8. Eine Maschine gemäß Anspruch 1, bei der das Stapelsystem (1) ferner eine Bewegungseinrichtung (9) zum Bereitstellen einer horizontalen Bewegung des bewegbaren Körpers (10) aufweist.

9. Eine Maschine gemäß Anspruch 8, bei der die Bewegungseinrichtung (9) ein Förderband aufweist, das das Drehkopfsystem (2) trägt.

10. Eine Maschine gemäß Anspruch 8, bei der die Bewegungseinrichtung (9) einen Motor aufweist.

11. Eine Maschine gemäß Anspruch 10, bei der der Motor aus einer Gruppe ausgewählt ist, die einen elektrischen Motor, einen hydraulischen Motor oder einen pneumatischen Motor aufweist.

12. Eine Maschine gemäß Anspruch 1, die ferner eine Einrichtung zum Steuern der Bewegung des Drehkopfsystems (2) und eine Zähleinrichtung in der Stapeleinheit (5) aufweist, so dass die wärmegeformten Artikel in der Stapeleinheit (5), die eine vorbestimmte Anzahl erreichen, zum Verpacken ausgeworfen werden.

13. Eine Maschine gemäß Anspruch 1, die vom Typ zum Herstellen wärmegeformter Becher ist.

14. Ein Verfahren zum Herstellen wärmegeformter Artikel aus einem Kunststoffmaterial, das die folgenden Schritte aufweist:
- Zuführen einer thermoplastischen Polymerfolie zu der Maschine gemäß Anspruch 1 und Tiefziehen von wärmegeformten Artikeln (3) in dem Formbildungsabschnitt (4) und
- Stapeln der wärmegeformten Artikel (3) in der Stapeleinheit (5).

15. Ein Verfahren gemäß Anspruch 14, bei dem das Kunststoffmaterial aus der Gruppe ausgewählt ist, die aus Polystyren, Polypropylen und Polyethylen besteht.

## Revendications

1. Machine pour fabriquer des articles thermoformés (3) comprenant un système d'empilement (1) ayant une partie de formage de moule (4), une unité d'empilement (5) et un système de tourelle (2) pouvant fonctionner entre lesdites partie de formage de moule (4) et unité d'empilement (5) agencées à une distance l'une de l'autre dans une direction horizontale (x), **caractérisée en ce que** le système d'empilement (1) comprend en outre :
un corps (12) ayant un canal guide de came (13) s'étendant à travers la distance le long de la direction horizontale (x), dans laquelle une extrémité (20) dudit canal guide de came (13) est agencée dans une position supérieure comparée à l'autre extrémité (21) par rapport à la direction verticale (y), et
un système de tourelle (2) comprenant un corps déplaçable (10) se déplaçant de manière sensiblement linéaire à travers l'axe horizontal (x), et des composants supplémentaires (8, 19) se déplaçant biaxialement (x, y) et tournant indépendamment dudit corps déplaçable (10) pour prendre les articles thermoformés (3) de la partie de formage de moule (4) et expulser ceux-ci vers l'unité d'empilement (5), en sorte que le système de tourelle (2) comprend en outre des moyens (14, 15, 16, 17) pour déplacer les composants (8, 19) transportant les articles thermoformés (3) biaxialement (x, y) de telle sorte que lesdits composants (8, 19) soient adaptés pour tourner lorsque les moyens (14, 15, 16, 17) rencontrent une différence dans la direction verticale (y) à travers ledit canal guide de came (13).

2. Machine selon la revendication 1, dans laquelle la partie de formage de moule (4) et l'unité d'empilement (5) sont prévues dans un agencement face à face de telle sorte que les composants (8, 19) transportant les articles thermoformés (3) soient tournées par pivotement avec un angle obtus, de préférence d'environ 180°.

3. Machine selon la revendication 1, dans laquelle des moyens (14, 15, 16, 17) pour déplacer les composants (8, 19) transportant les articles thermoformés (3) biaxialement (x, y) comprennent un palier (14) se déplaçant à travers le canal guide de came (13), un bras pivotant (15) relié audit palier (14) et un mécanisme à roues d'engrenage (16, 17) faisant tourner lesdits composants (8, 19) par pivotement une fois que le palier (14) rencontre une différence dans la direction verticale (y) à travers ledit canal guide de came (13).

4. Machine selon la revendication 3, dans laquelle l'une des roues d'engrenage (16) a un diamètre plus grand que l'autre roue d'engrenage (17), et ladite plus grande roue d'engrenage (16) est reliée au bras pivotant (15) de manière rotative tandis que la plus petite roue d'engrenage (17) est fixement reliée à l'un des composants (8, 19) supportant les articles thermoformés (3).

5. Machine selon la revendication 1 ou 4, dans laquelle les composants (8, 19) supportant les articles thermoformés (3) comprennent une plaque de tourelle (19) et une pluralité de bras (8) fixement reliés à la plaque de tourelle (19).

6. Machine selon la revendication 5, dans laquelle les bras (8) comprennent des moyens d'aspiration pour recevoir les articles thermoformés (3) provenant d'une pluralité de cavités (7) dans la partie de formage de moule (4).

7. Machine selon la revendication 1, dans laquelle le système d'empilement (1) comprend en outre un rail linéaire (11) de sorte que le corps déplaçable (10) puisse se déplacer dans un chemin sensiblement linéaire à travers la direction horizontale (x).

8. Machine selon la revendication 1, dans laquelle le système d'empilement (1) comprend en outre des moyens de déplacement (9) pour fournir un déplacement horizontal du corps déplaçable (10).

9. Machine selon la revendication 8, dans laquelle les moyens de déplacement (9) comprennent une bande de convoyage portant le système de tourelle (2).

10. Machine selon la revendication 8, dans laquelle les moyens de déplacement (9) comprennent un moteur.

11. Machine selon la revendication 10, dans laquelle le moteur est choisi parmi un groupe comprenant un moteur électrique, un moteur hydraulique ou un moteur pneumatique.

12. Machine selon la revendication 1, comprenant en outre des moyens pour commander le déplacement du système de tourelle (2) et des moyens de comptage dans l'unité d'empilement (5) de sorte que les articles thermoformés dans l'unité d'empilement (5) atteignant un nombre prédéterminé soient expulsés pour un emballage.

13. Machine selon la revendication 1 qui est du type pour fabriquer des gobelets thermoformés.

14. Procédé pour fabriquer des articles thermo-formé à partir d'une matière plastique, comprenant les étapes de :
- alimenter en film de polymère thermoplastique la machine selon la revendication 1 et effectuer un emboutissage profond des articles thermoformés (3) dans la partie de formage de moule (4), et
- empiler les articles thermoformés (3) dans l'unité d'empilement (5).

15. Procédé selon la revendication 14, dans lequel la matière plastique est choisie parmi le groupe constitué de polystyrène, de polypropylène et de polyéthylène.
